(19) Europäisches Patentamt
European Patent Office
Office européen des brevets

(11) Publication number: 0 032 072 B1

# (12) EUROPEAN PATENT SPECIFICATION

(45) Date of publication of patent specification: 18.05.83

(21) Application number: 80401731.7

(22) Date of filing: 03.12.80

(51) Int. Cl.³: B 01 F 17/12, E 21 B 43/22 //C09K7/02

## (54) Surfactant compositions useful in enhanced oil recovery processes.

(30) Priority: 03.12.79 US 99264

(43) Date of publication of application: 15.07.81 Bulletin 81/28

(45) Publication of the grant of the patent: 18.05.83 Bulletin 83/20

(84) Designated Contracting States: DE FR GB

(56) References cited:
DE - A - 1 917 251
DE - A - 2 129 956
DE - A - 2 150 559
DE - A - 2 241 567
DE - B - 1 256 222
US - A - 3 945 437

(73) Proprietor: THE DOW CHEMICAL COMPANY
Dow Center 2030 Abbott Road Post Office Box 1967
Midland Michigan 48640 (US)

(72) Inventor: Hinkamp, Paul Eugene
1304 Ashly Court
Midland, Michigan (US)
Inventor: Tompkins, David Carson
4309 Robinhood
Midland, Michigan (US)
Inventor: Byth, Nancy Jean
1915 Kentwood Lane
Carrollton, Texas (US)
Inventor: Thompson, James Lee
4518 S. Irvington
Tulsa, Oklahoma (US)

(74) Representative: Peuscet, Jacques
Cabinet Peuscet 3, Square de Maubeuge
F-75009 Paris (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 032 072 B1

Surfactant compositions useful in enhanced oil recovery processes

This invention relates to surfactant compositions useful in enhanced oil recovery processes. In one aspect, the invention relates to surfactant compositions comprising a glycol ether while in another aspect, the invention relates to the use of the surfactant compositions in an aqueous flooding process for removing oil from a porous, subterranean rock reservoir.

Most of the oil held in subterranean, porous rock reservoirs is produced, i.e., raised to the surface, either through the action of dissolved gases which force the oil to the surface as a froth or through a pumping action when natural reservoir pressure has been dissipated. These two production methods are termed primary oil recovery. However, such production methods usually recover less than about 25 percent of the known reservoir oil content.

Early in the 1900's, forcing water down selected well bores or injection wells to force oil through the reservoir pores to designated producing wells was accomplished successfully in Pennsylvania. Water flooding, or secondary oil recovery, has now been widely applied and presently accounts for more than half of the oil produced in the United States. This method usually adds about 15 percent to the total oil recovery from a given reservoir before the ratio of water:oil produced becomes so high (about 30:1) that the wells can no longer be operated economically.

Other methods used to recover the remaining portion (50—60 percent) of the original oil content of a reservoir are generally termed tertiary oil recovery or enhanced oil recovery methods. A variety of such methods are known and include steam flooding, miscible flooding with carbon dioxide, in situ combustion of part of the reservoir oil content, and flooding with micellar or aqueous surfactant solutions.

With regard to surfactant flooding, aqueous anionic surfactant systems are known to be useful for displacing oil from porous, subterranean rock reservoirs. These surfactant systems are generally comprised of petroleum sulfonates, often in combination with such materials as electrolytes, water-thickeners, and emulsion modifiers. While these systems demonstrate generally good efficiency, their utility is often limited by their low tolerance to multivalent cations. These cations, such as calcium and magnesium, are often encountered in brines of subterranean reservoirs and tend to form anionic surfactant precipitates or cause surfactant phase separations when contacted with aqueous anionic surfactant systems. Although the use of various cosurfactants, such as alkoxy-alcohol sulfates and aromatic ether polysulfonates, are known to improve the multivalent cation tolerance of these aqueous anionic surfactant systems, there continues a search for new such cosurfactants. Aqueous anionic surfactant systems, their tolerance problems to multivalent cations, and suggested cosurfactants for overcoming these tolerance problems are further described in U.S. - A - 3,945,437 which teaches systems consisting of an aromatic ether polysulfonate, a petroleum sulfonate, and alkoxy alcohol sulfates. The interfacial tension between these systems and oil is less than about $10^{-4}$ Newton/meter (0.1 dyne per centimeter) and the systems are taught to have good tolerance toward salts of mono- and/or multivalent cations found in the brine of many oil reservoirs. While these surfactant systems have demonstrated utility in the removal of oil from a porous, subterranean rock reservoir, their use toward this end is not without cost.

A significant factor in the cost of using aqueous anionic surfactant systems for the displacement of oil from a subterranean rock reservoir is loss of the surfactant system to the rock reservoir by adsorption, i.e., attachment to the active surfactant components to the reservoir surface. The extent of surfactant adsorption is primarily dependent upon the physical and chemical properties of the reservoir but given the relatively high cost of the surfactant systems, any decrease in the loss due to adsorption can be an economically significant factor in the production of oil from the reservoir.

According to this invention, surfactant adsorption by a porous, subterranean rock reservoir is significantly reduced by using a surfactant composition comprising:

(1) at least one sulfonated alkylated polyaromatic surfactant,

(2) at least one petroleum sulfonate,

(3) at least one condensation product of a $C_2$—$C_3$ alkylene oxide and a $C_8$—$C_{16}$ alkanol or sulfate of said product, and characterized in that it comprises, in combination with the above constituents (1), (2) and (3),

(4) at least one glycol ether of the formula

$$R(OR')_nOH \qquad (I)$$

where R is a $C_1$—$C_6$ alkyl radical or a phenyl radical, R' is a $C_2$—$C_4$ alkylene radical and n is 1—5.

The surfactant compositions of this invention demonstrate good tolerance to reservoir brine having both a high salinity and divalent ion content, e.g., $Ba^{++}$, $Mg^{++}$, $Sr^{++}$, $Ca^{++}$, etc., and the compositions demonstrate remarkably low, as compared to prior art surfactant compositions, adsorption onto the surface of the oil reservoir.

The sulfonated, alkylated, polyaromatic surfactants are preferably selected from surfactants such

as the alkylated diphenyl oxide sulfonates or the alkylated biphenyl disulfonates. The alkylated diphenyl oxide sulfonates here used are of the general formula

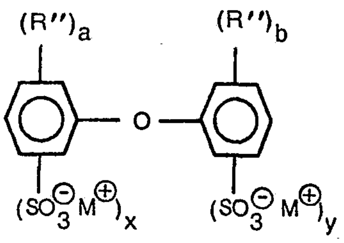

(II)

wherein each R″ is an alkyl radical and each R″ can be the same or different, each $M^{\oplus}$ is a hydrogen, alkali metal ion, alkaline earth metal ion or ammonium ion and each $M^{\oplus}$ can be the same or different, a and b are individually 0 or 1 with the proviso that the $\Sigma(a + b)$ is at least 1, and x and y are individually 0 or 1 with the proviso that the average value of $\Sigma(x + y)$ for all (II) is at least about 1.7 and preferably at least about 1.8. R″ is preferably an alkyl radical of between 4 and 18 carbon atoms, and more preferably of between 10 and 18 carbon atoms. The alkyl radicals of R can be linear, branched or cyclic but the linear and branched radicals are preferred. The $M^{\oplus}$ ammonium ion radicals are of the formula

$$(R''')_3HN^{\oplus} \qquad \text{(III)}$$

wherein R‴ is a hydrogen, $C_1$—$C_4$ alkyl or $C_1$—$C_4$ hydroxyalkyl radical and each R‴ can be the same or different. Illustrative $C_1$—$C_4$ alkyl and hydroxyalkyl radicals include, for example, methyl, ethyl, propyl, isopropyl, butyl, hydroxymethyl, or hydroxyethyl. Typical ammonium ion radicals include, for example, ammonium ($N^{\oplus}H_4$), methyl ammonium ($CH_3N^{\oplus}H_3$), ethyl ammonium ($C_2H_5N^{\oplus}H_3$), dimethyl ammonium ($(CH_3)_2N^{\oplus}H_2$), methylethyl ammonium ($CH_3N^{\oplus}H_2C_2H_5$), trimethyl ammonium ($(CH_3)_3N^{\oplus}H$), dimethylbutyl ammonium ($(CH_3)_2N^{\oplus}HC_4H_9$), hydroxyethyl ammonium ($HOCH_2CH_2N^{\oplus}H_3$), or methylhydroxyethyl ammonium ($CH_3N^{\oplus}H_2CH_2CH_2OH$). $M^{\oplus}$ is preferably an alkali metal ion and more preferably an ion of sodium or potassium.

Surfactant compositions comprising sulfonates of formula II are known in the art and a series of such compositions are manufactured by The Dow Chemical Company under the trademark DOWFAX. Representative of these compositions are DOWFAX 2A1 surfactant (an 80:20 mixture, by weight, of disodium mono-($\Sigma(a + b) = 1$) and di-($\Sigma(a + b) = 2$) alkylated (each R″ is a branched $C_{12}$ alkyl radical) diphenylether disulfonate) and DOWFAX 3B2 surfactant (an 80:20 mixture, by weight, of disodium mono-($\Sigma(a + b) = 1$) and di-($\Sigma(a + b) = 2$) alkylated (each R″ is a linear $C_{10}$ alkyl radical) diphenylether disulfonate). Although the sulfonates of formula II can be used alone as the alkylated diphenyl oxide sulfonate component of the surfactant composition of this invention, preferably a combination of two sulfonates of formula II differing only in the number of R″ substituents (i.e., a combination of mono- and dialkylated sulfonates) are here used. The commercially available compositions of DOWFAX 2A1 and 3B2 surfactants are the preferred alkylated diphenyl oxide sulfonate component of this invention.

The tolerance to multivalent cations of aqueous anionic surfactant systems useful for displacing oil from a porous, subterranean rock reservoir is improved by using as a cosurfactant an alkylated biphenyl disulfonate of the formula

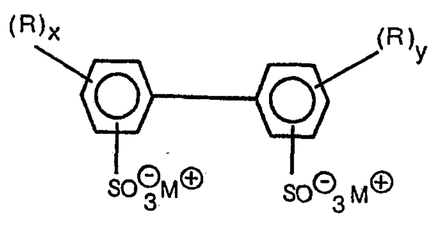

(IV)

wherein

R is an alkyl radical of at least 6 carbon atoms and each R can be the same or different;

$M^{\oplus}$ is hydrogen, alkali metal ion, alkaline earth metal ion or ammonium ion radical and each $M^{\oplus}$ can be the same or different; and

x and y are individually integers of 0—2 with the proviso that $\Sigma(x + y) \geq 1$.

A preferred composition of the invention comprises an aqueous anionic surfactant system having a relatively high tolerance to multivalent cations, said system including:

(a) a substantially homogeneous aqueous liquid system containing at least one dissolved or dispersed petroleum sulfonate surfactant; and

(b) at least one alkylated biphenyl disulfonate of the formula

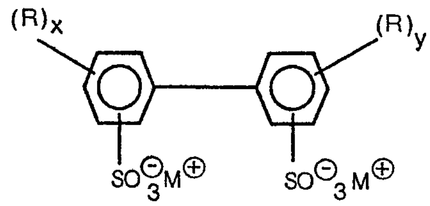

wherein

R is an alkyl radical of at least 6 carbon atoms and each R can be the same or different;

$M^{\oplus}$ is hydrogen, alkali metal ion, alkaline earth metal ion or ammonium ion radical and each $M^{\oplus}$ can be the same or different; and

x and y are individually integers of 0—2 with the proviso that $\Sigma(x + y) \geqq 1$.

A preferred embodiment of the invention further consists in a process for displacing oil from a porous, subterranean rock reservoir, said process comprising injecting into the reservoir an active aqueous anionic surfactant system, that contains a sufficient amount of an alkylated biphenyl disulfonate to improve the system's multivalent cation tolerance without significantly reducing the interfacial tension-lowering activity of the system said disulfonate being of the formula

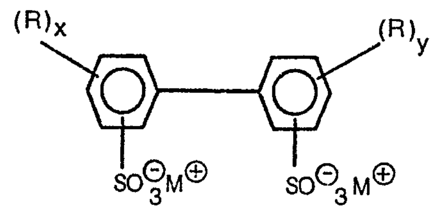

wherein

R is an alkyl radical of at least 6 carbon atoms and each R can be the same or different;

$M^{\oplus}$ is hydrogen, alkali metal ion, alkaline earth metal ion or ammonium ion radical and each $M^{\oplus}$ can be the same or different; and

x and y are individually integers of 0—2 with the proviso that $\Sigma(x + y) \geqq 1$.

For preparing an alkylated biphenyl disulfonate of the formula

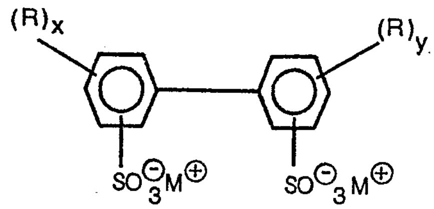

(I)

wherein

R is an alkyl radical of at least 6 carbon atoms and each R can be the same or different;

$M^{\oplus}$ is hydrogen, alkali metal ion, alkaline earth metal ion or ammonium ion radical and each $M^{\oplus}$ can be the same or different; and

x and y are individually integers of 0—2 with the proviso that $\Sigma(x + y) \geqq 1$,

a preferred method comprises the steps of:

contacting the alkylated biphenyl with sulfur trioxide dissolved in refluxing sulfur dioxide, the sulfur trioxide and alkylated biphenyl contacted at a sulfur trioxide:alkylated biphenyl mole ratio of at least about 2; and, optionally, contacting the resulting alkylated biphenyl disulfonic acid with a neutralizing solution comprising ions or ion radicals of $M^{\oplus}$.

The disulfonates used in the invention demonstrate good tolerance to multivalent cations, such as the cations of calcium and magnesium, good resistance to hydrolysis, and are useful surfactants in enhanced oil recovery processes.

The ammonium ion radicals here used are of the formula

$$(R')_3HN^{\oplus} \qquad (V)$$

wherein R' is a hydrogen, $C_1$—$C_4$ alkyl or $C_1$—$C_4$ hydroxyalkyl radical and each R' can be the same or different. Illustrative $C_1$—$C_4$ alkyl and hydroxyalkyl radicals include: methyl, ethyl, propyl, isopropyl, butyl, hydroxymethyl, hydroxyethyl, etc. Typical ammonium ion radicals include: ammonium ($N^{\oplus}H_4$), methylammonium ($CH_3N^{\oplus}H_3$), ethylammonium ($C_2H_5N^{\oplus}H_3$), dimethylammonium ($(CH_3)_2N^{\oplus}H_2$), methylethylammonium ($CH_3N^{\oplus}H_2C_2H_5$), trimethylammonium ($(CH_3)_3N^{\oplus}H$), dimethylbutylammonium ($(CH_3)_2N^{\oplus}HC_4H_9$), hydroxyethylammonium ($HOCH_2CH_2N^{\oplus}H_3$), methylhydroxyethylammonium

($CH_3N^{\oplus}H_2CH_2CH_2OH$), etc. $M^{\oplus}$ is preferably an alkali metal ion and more preferably an ion of sodium or potassium. R is preferably an alkyl radical of between 8 and 18 carbon atoms, and more preferably of between 10 and 18 carbon atoms. The alkyl radicals of R can be linear, branched or cyclic but the linear and branched radicals are preferred. The $\Sigma(x + y)$ is preferably equal to 1 or 2. Alkylated biphenyl disulfonates wherein R is a linear or branched alkyl radical of between about 12 and about 18 carbon atoms, $M^{\oplus}$ is a sodium or potassium ion, and $\Sigma(x + y)$ is 1 or 2, are most preferred.

The term "disulfonate" here includes both alkylated biphenyl disulfonic acids and the alkali metal, alkaline earth metal and ammonium salts thereof.

The petroleum sulfonates here used typically comprise mixtures of relatively water-soluble and water-insoluble alkali metal salts of materials such as alkylaryl sulfonates, or alkylated benzene sulfonates. The petroleum sulfonates available commercially from Mobil Oil Comany (e.g., Promor® sulfonates) and Witco Chemical Company (e.g., Petronate® sulfonate salts and Pyronate® sulfonates) are typical. These petroleum sulfonates usually have a molecular weight average of at least about 400.

The third component of the surfactant composition of this invention comprises a condensation product of a $C_8$—$C_{16}$ alkanol and a $C_2$—$C_3$ alkylene oxide. The alkanols can be either linear or branched but primary $C_{10}$—$C_{12}$ linear alkanols are preferred. Ethylene oxide is the preferred alkylene oxide. The alkanol and alkylene oxide are typically condensed into a product having an alkanol:oxide mole ratio between 1:1 and 1:10, preferably between 1:1 and 1:5. Where the condensation product is made from combining the alkanol with a mixture of $C_2$ and $C_3$ alkylene oxides, the ethylene oxide is preferably present in a molar amount at least three times greater than the molar concentration of the $C_3$ alkylene oxide. As used herein, the term "condensation product" of an alkanol and an alkylene oxide includes polyoxyalkylated alcohol surfactants, such as the sulfates of ethoxylated primary alcohols exemplified by those manufactured and sold by Shell Chemical Company and Union Carbide under the trademarks NEODOL and TERGITOL, respectively.

The glycol ethers here used are of formula I

$$R\!\left(\!-OR'-\!\right)_{n}OH \qquad (I)$$

wherein R, R' and n are as previously defined. Preferably, R is a $C_1$—$C_4$ alkyl radical and R' is ethylene or 1,2-propylene. When n is greater than 1, each R' can be the same or different although typically they are the same. n is typically 1, 2 or 3 and preferably 1 or 2. Representative of the glycol ethers that can be used in the practice of this invention are a series of materials manufactured by The Dow Chemical Company under the trademark DOWANOL. Representative DOWANOL glycol ethers include: DOWANOL DB (diethylene glycol n-butylether), DOWANOL DE (diethylene glycol ethylether), DOWANOL DM (diethylene glycol methylether), DOWANOL DPM (dipropylene glycol methylether), DOWANOL EB (ethylene glycol n-butylether), DOWANOL EPh (ethylene glycol phenylether), DOWANOL PiBT (a mixture of isobutylethers of propylene glycol and its homologs), and DOWANOL TPM (tripropylene glycol methylether).

While each of the components that comprise the surfactant composition of this invention can be but a single material, each component, like the alkylated diphenyl oxide sulfonate, can comprise a mixture of materials. In other words, the petroleum sulfonate component of this invention can comprise a mixture of two different petroleum sulfonates or the alkanol/alkylene oxide condensation product component of this invention can comprise a mixture of one or more alkanols in combination with one or more alkylene oxides, or the glycol ether component of this invention can comprise a mixture of two or more glycol ethers. Moreover, the surfactant composition of this invention can comprise materials in addition to the four components previously described. Additional such components include various electrolytes, such as sodium and potassium chloride, and various water thickeners, such as carboxymethyl cellulose, hydroxyethyl cellulose, guar and guar derivatives and other polysaccharides, partially hydrolyzed polyacrylamide, etc. These additional components are not critical to the invention and can be used as desired.

The respective proportions of each component that comprises the surfactant composition of this invention will, as noted earlier, depend upon the properties of the reservoir or formation. Typically, the surfactant composition contains sufficient alkyl diphenyl oxide sulfonate to provide good compatibility with the high salinity and divalent ion concentration of the reservoir brines, sufficient petroleum sulfonates to provide an interfacial tension between the surfactant composition and the oil no greater than $10^{-4}$N/m (0.1 dyne per centimeter), preferably $10^{-5}$N/m (0.01 dyne per centimeter), sufficient alkanol/alkylene oxide condensation product to act as a solubility and water-wetting agent for the petroleum sulfonate and thus assist in reducing the interfacial tension between the water and the oil, and sufficient glycol ether to solubilize the other components such that the adsorption of the other components on the reservoir surface is significantly reduced. Reservoirs having relatively high porosity and small pore size make available a large surface area for adsorption and thus increase the possibility of entrapment of the surfactant molecules. In the presence of carbonates, such as dolomite, the possibility of surfactant adsorption is increased. Under such circumstances, relatively more glycol ether is required than under conditions where the reservoir or formation has a relatively low porosity,

relatively large pore size and the presence of little or no carbonate. A typical surfactant composition comprises 100 parts by weight of an aqueous mixture of:

(1) 0.005 to 3.0, preferably 0.30—1.50, parts alkylated diphenyl oxide sulfonate,

(2) 0.1 to 12, preferably 0.30—3.0 parts, petroleum sulfonate,

(3) 0.01 to 5, preferably 0.25—2.5 parts, alkanol/alkylene oxide condensation product,

(4) 4.5 to 13.5, preferably 6.5—9 parts, glycol ether, and

(5) the remaining parts water.

The surfactant compositions of this invention are used in the same manner as known surfactant compositions for displacing oil from a porous, subterranean rock reservoir. A slug of surfactat formulation, typically between about 4 and about 10 percent of the pore volume of the rock reservoir, is injected into the formation. The surfactant lowers the interfacial tension between the injected fluid and the reservoir oil to lower than about $10^{-4}$N/m (0.1 dyne/cm), preferably to lower than about $10^{-5}$N/m (0.01 dyne/cm). This low interfacial tension essentially eliminates the capillary forces and can result in essentially a 100 percent displacement efficiency in the sweep area of the reservoir. The surfactant slug is followed by a large slug of water containing a high molecular weight polymer. This subsequent slug usually ranges in size from about 25 to about 75 percent of the pore volume of the reservoir. The polymer solution slug is used to develop a favorable mobility ratio displacement, to improve the sweep efficiency, and to preserve the integrity of the surfactant composition slug. The use of the surfactant composition of this invention substantially reduces the interfacial tension between the water and oil while reducing surfactant retention due to adsorption and entrapment. Moreover, these benefits are gained frequently at lower surfactant concentrations than required by the prior art. Still further, the surfactant compositions of this invention demonstrate excellent tolerance to mono- and polyvalent cations, such as the cations of calcium and magnesium, typically found in reservoir brine.

The following examples are illustrative of the specific embodiments of this invention. Unless indicated to the contrary, all parts and percentages are by weight.

## Specific Embodiments

### Example 1

Core samples of a fairly uniform sandstone were used in this experiment. The samples had an average pore entry radius of $5 \times 10^{-3}$ mm (5 microns), a porosity of 20 percent, an average permeability of $345.45 \times 10^{-16}$ m² (35 md) ($9.87 \times 10^{-16}$ m² — $1085.7 \times 10^{-16}$ m² range i.e. 1 md-110 md range), a connate water saturated of 30 percent and a wettability index of 0.20 (i.e., slightly water-wet). The samples also contained about 8 percent dolomite as determined by acid solubility.

The cores were cleaned by carbon dioxide solvent extraction and then restored to their natural state. The cores were then flooded in the below-described procedure with the surfactants, injection water and isopropyl alcohol.

A cleaned core was satured with formation water. The weight, bulk volume, pore volume and porosity were then determined. The core was placed in a Hassler sleeve and subjected to the following flow sequence:

(1) 10 pore volumes of surfactant composition,

(2) 22 pore volumes of injection water, and

(3) 4½ pore volumes of isopropyl alcohol (to desorb the surfactant).

Samples were collected, analyzed and a material balance was then made to account for all of the surfactant.

Two surfactant compositions were prepared. The first composition contained 100 parts of an aqueous mixture of by weight 0.47 percent of a 75—25 (weight ratio) blend of the product TRS 10—80 (80 percent active) and condensation product A and 0.20 part of the "2A1 surfactant" commercialized under the registered trademark "DOWFAX". The product TRS 10—80 (marketed by Witco Chemical Company, Inc.) is an 80 percent active petroleum sulfonate with an average molecular weight of 405; condensation product A is condensation product of one mole of a $C_{10}$—$C_{12}$ alcohol with 5 moles of ethylene oxide; and DOWFAX 2A1 surfactant (manufactured by The Dow Chemical Company) is an 80:20 mixture of sodium mono- and di-branched $C_{12}$ diphenylether disulfonates. The second composition contained by weight 91.9 parts of the first composition and 8.1 parts ethylene glycol monobutylether.

Analysis of the collected samples indicated that the first surfactant composition was absorbed on the core of the extent of approximately 6.5539 kg/m³ (17,790 pounds per acre-foot). The second composition, the composition of this invention, was absorbed to the extent of approximately 0.41 kg/m³ (1,113 pounds per acre-foot). This marked reduction in absorption of surfactant greatly enhances the cost efficiency of a flooding process.

### Example 2

The procedure of Example 1 was repeated except different core samples were employed and the components of the surfactant compositions were changed. The core samples had an average pore entry radius of $10^{-2}$ mm (10 microns), a porosity of 18 percent, an average permeability of $9.87 \times 10^{-14}$ m² (100 md) ($9.87 \times 10^{-15}$ m² — $34.545 \times 10^{-14}$ m² range i.e. 10 md-350 md range), a connate water

saturation of 31 percent and wettability index of 0.22. The first surfactant composition contained 11.5 parts of a 50:40:10 (weight ratio) blend of TRS 18, TRS 40 (both marketed by Witco Chemical Company, Inc.) and condensation product A, and 2.1 parts DOWFAX 2A1 surfactant. TRS 18 is a 62 percent active petroleum surfonate with an average molecular weight of 495 and TRS 40 is a 40 percent active petroleum sulfonate with an average molecular weight of 335. Condensation product A and DOWFAX 2A1 surfactant are described in Example 1. The second composition contained by weight 91 parts of the first composition and 9 parts ethylene glycol monobutylether. Results of these experiments demonstrated that the first composition adsorbed onto the core sample at the rate of about 1.3108 kg/m³ (3,558 pounds per acre-foot) while the second composition adsorbed at the rate of less than 7.5 percent of the first sample (about 0.0980 kg/m³ (266 pounds per acre-foot)). Moreover, the salinity of the injection water was relatively high (approximately 6 percent) but both surfactant compositions showed good displacement of the reservoir oil.

Although the invention has been described in considerable detail by the above examples, this detail is for the purpose of illustration only and is not to be construed as a limitation upon the specification or appended claims.

## Claims

1. An aqueous surfactant composition comprising: (1) at least one sulfonated, alkylated polyaromatic surfactant; (2) at least one petroleum sulfonate, and (3) at least one condensation product of a $C_8$—$C_{16}$ alkanol and a $C_2$—$C_3$ alkylene oxide or sulfate of said product, characterized in that it comprises in combination with the above constituents (1), (2) and (3), (4) at least one glycol ether of the formula:

$$R\text{-}(\text{-}OR'\text{-})_n\text{-}OH \qquad (I)$$

where R is a $C_1$—$C_6$ alkyl radical or a phenyl radical, R' is a $C_2$—$C_4$ alkylene radical and n is 1—5.

2. A composition according to claim 1, characterized in that in the glycol ether of formula (I), R is a $C_1$—$C_4$ alkyl radical, R' is ethylene or 1,2-propylene, and n is 1 or 2.

3. A composition according to claim 1 or 2, characterized in that the surfactant is an alkylated diphenyl oxide sulfonate of the formula:

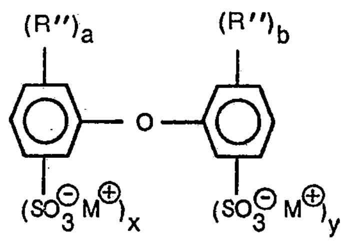

(II)

wherein: each R'' is an alkyl radical of between 10 and 18 carbon atoms; each M⊕ is a hydrogen, alkaline metal ion, alkaline earth metal ion or ammonium ion; a and b are individually 0 or 1 with the proviso that the $\Sigma(a + b)$ is at least 1, and x and y are individually 0 or 1 with the proviso that the average value of $\Sigma(x + y)$ for all (II) is at least 1.7.

4. A composition according to claim 3, characterized in that M⊕ is hydrogen or an alkali metal ion.

5. A composition according to claim 4, characterized in that the alkylated diphenyl oxide sulfonate is an 80:20 mixture, by weight, of disodium mono- and dialkylated diphenyl ether disulfonate where R'' is a branched $C_{12}$ alkyl radical.

6. A composition according to claim 1, characterized in that the surfactant is an alkylated biphenyl disulfonate of the formula:

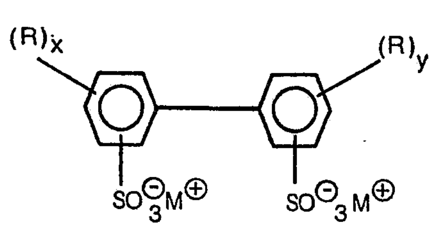

wherein: R is an alkyl radical of at least 6 carbon atoms and each R can be the same or different; M⊕ is hydrogen, alkali metal ion, alkaline earth metal ion or ammonium ion radical and each M⊕ can be the same or different; and x and y are individually integers of 0—2 with the proviso that $\Sigma(x + y) \geqq 1$.

7. A composition according to claim 6, characterized in that R is a linear or branched alkyl radial of between 8 and 18 carbon atoms.

8. A composition according to claim 7, characterized in that $M^{\oplus}$ is an alkali metal ion.

9. A composition according to claim 8, characterized in that $\Sigma(x + y)$ is 1 or 2.

10. A composition according to claim 6, characterized in that R is a linear or branched alkyl radical of between 10 and 18 carbon atoms, $M^{\oplus}$ is an ion of sodium or potassium, and $\Sigma(x + y)$ is 1 or 2.

11. A composition according to any preceding claim, characterized in that the petroleum sulfonate has a molecular weight average of at least 400.

12. A composition according to any preceding claim, characterized in that the condensation product is the product of a primary $C_{10}$—$C_{12}$ linear alkanol and ethylene oxide, the product having an alkanol oxide mole ratio between 1:1 and 1:10.

13. A composition according to any preceding claim, characterized in that it comprises 100 parts by weight of an aqueous mixture of: (1) 0.005 to 3.0 parts of said polyaromatic surfactant, (2) 0.1 to 12 parts of said petroleum sulfonate, (3) 0.01 to 5 parts of said condensation product, (4) 4.5 to 13.5 parts of said glycol ether, and (5) the remaining parts water.

14. A composition according to claim 13, characterized in that it comprises 100 parts by weight of an aqueous mixture of: (1) 0.30 to 1.50 parts of said polyaromatic surfactant, (2) 0.30 to 3.0 parts of said petroleum sulfonate, (3) 0.25 to 2.5 parts of said condensation product, (4) 6.5 to 9 parts of said glycol ether, and (5) the remaining parts water.

15. A process for displacing oil from a porous, subterranean rock reservoir, comprising the steps of injecting into the reservoir an active, aqueous anionic surfactant system comprising (1) a sulfonated, alkylated, polyaromatic surfactant, (2) a petroleum sulfonate, and (3) a condensation product of a $C_8$—$C_{16}$ alkanol and a $C_2$—$C_3$ alkylene oxide or sulfate of said product, characterized in that the surfactant system comprises, in combination with the above constituents (1), (2) and (3), (4) a glycol ether of the formula:

$$R(OR')_nOH \qquad (I)$$

where R is a $C_1$—$C_6$ alkyl radical or a phenyl radical, R' is a $C_2$—$C_4$ alkylene radical, and n is 1—5.

16. A process according to claim 15, characterized in that the polyaromatic surfactant is selected from at least one alkylated diphenyl oxide sulfonate or an alkylated biphenyl disulfonate.

17. A process according to claim 15, characterized in that the active, aqueous anionic surfactant system is the aqueous surfactant composition according to any one of claims 2 to 14.

**Revendications**

1. Composition tensio-active aqueuse comprenant

(1) au moins un tensio-actif polyaromatique alkylé sulfoné;

(2) au moins au sulfonate de pétrole, et

(3) au moins un produit de condensation d'un alcanol en $C_8$—$C_{16}$ et d'un oxyde d'alkylène en $C_2$—$C_3$ ou un sulfate dudit produit, caractérisée par le fait qu'elle comprend, en combinaison avec les constituants ci-dessus (1), (2) et (3),

(4) au moins un éther de glycol de formule:

$$R(OR')_nOH \qquad (I),$$

où R est un radical alkyle en $C_1$—$C_6$ ou un radical phényle, R' est un radical alkylène en $C_2$—$C_4$ et n vaut 1—5.

2. Composition selon la revendication 1, caractérisée par le fait que, dans l'éther de glycol de formule (I), R est un radical alkyle en $C_1$—$C_4$, R' est l'éthylène ou le 1,2-propylène, et n vaut 1 ou 2.

3. Composition selon la revendication 1 ou 2, caractérisée par le fait que le tensio-actif est un sulfonate d'oxyde de diphényle alkylé de formule:

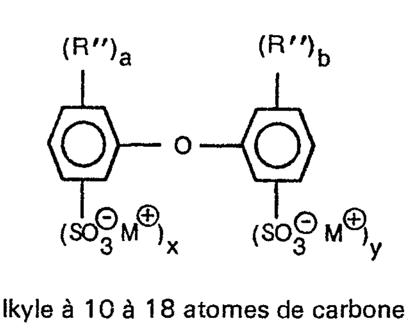

(II)

où chaque R'' est un radical alkyle à 10 à 18 atomes de carbone; chaque $M^{\oplus}$ est un hydrogène, un ion de métal alcalin, un ion de métal alcalino-terreux ou un ion ammonium; a et b valent individuellement 0 ou 1, à la condition que $\Sigma(a + b)$ vaille au moins 1, et x et y valent individuellement 0 ou 1 à la condition que la valeur moyenne de $\Sigma(x + y)$ pour tous les (II) soit d'au moins 1,7.

4. Composition selon la revendication 3, caractérisée par le fait que $M^{\oplus}$ est l'hydrogène ou un ion de métal alcalin.

5. Composition selon la revendication 4, caractérisée par le fait que le sulfonate d'oxyde de diphényle alkylé est un mélange 80:20 en poids de disulfonates disodiques de diphényléther mono- et dialkylé, où R'' est un radical alkyle en $C_{12}$ ramifié.

6. Composition selon la revendication 1, caractérisée par le fait que le tensio-actif est un disulfonate de biphényle alkylé de formule

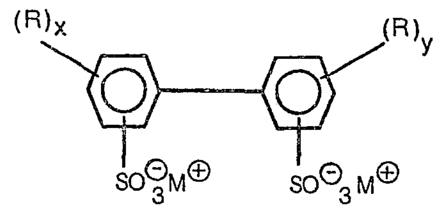

où R est un radical alkyle à au moins 6 atomes de carbone, les R pouvant être identiques ou différents; $M^{\oplus}$ est l'hydrogène, un ion de métal alcalin, un ion de métal alcalinoterreux ou un ion ammonium, les $M^{\oplus}$ pouvant être identiques ou différents; et x et y sont, à titre individuel, des entiers compris entre 0—2 à la condition que $\Sigma(x + y)$ soit $\geqq 1$.

7. Composition selon la revendication 6, caractérisée par le fait que R est un radical alkyle à chaîne droite ou ramifiée à 8 à 18 atomes de carbone.

8. Composition selon la revendication 7, caractérisée par le fait que $M^{\oplus}$ est un ion de métal alcalin.

9. Composition selon la revendication 8, caractérisée par le fait que $\Sigma(x + y)$ vaut 1 ou 2.

10. Composition selon la revendication 6, caractérisée par le fait que R est un radical alkyle à chaîne droite ou ramifiée à 10 à 18 atomes de carbone, $M^{\oplus}$ est un ion de sodium ou de potassium et $\Sigma(x + y)$ vaut 1 ou 2.

11. Composition selon l'une des revendications précédentes, caractérisée par le fait que le sulfonate de pétrole a une masse moléculaire moyenne d'au moins 400.

12. Composition selon l'une des revendications précédentes, caractérisée par le fait que le produit de condensation est le produit d'un alcanol linéaire primaire en $C_{10}$—$C_{12}$ et de l'oxyde d'éthylène, le produit ayant un rapport molaire entre l'alcanol et l'oxyde compris entre 1:1 et 1:10.

13. Composition selon l'une des revendications précédentes, caractérisée par le fait qu'elle comprend 100 parties en poids d'un mélange aqueux de:

(1) 0,005 à 3,0 parties du tensio-actif polyaromatique,
(2) 0,1 à 12 parties du sulfonate de pétrole,
(3) 0,01 à 5 parties du produit de condensation,
(4) 4,5 à 13,5 parties de l'éther de glycol, et
(5) le reste étant de l'eau.

14. Composition selon la revendication 13, caractérisée par le fait qu'elle comprend 100 parties en poids d'un mélange aqueux de:

(1) 0,30 à 1,50 partie du tensio-actif polyaromatique,
(2) 0,30 à 3,0 parties du sulfonate de pétrole,
(3) 0,25 à 2,5 parties du produit de condensation,
(4) 6,5 à 9 parties de l'éther de glycol, et
(5) le reste étant de l'eau.

15. Procédé pour déplacer l'huile à partir d'une roche réservoir souterraine poreuse, comprenant les étapes consistant à injecter dans la roche réservoir un système tensio-actif anionique aqueux actif comprenant:

(1) un tensio-actif polyaromatique alkylé sulfoné,
(2) un sulfonate de pétrole et
(3) un produit de condensation d'un alcanol en $C_8$—$C_{16}$ et d'un oxyde d'alkylène en $C_2$—$C_3$ ou un sulfate dudit produit, caractérisé par le fait que le système tensio-actif comprend, en combinaison avec les constituants ci-dessus (1), (2) et (3),
(4) un éther de glycol de formule:

$$R\!-\!(\!-OR'\!-\!)_{n}OH \qquad (I)$$

où R est un radial alkyle en $C_1$—$C_6$ ou un radical phényle, R' est un radical alkylène en $C_2$—$C_4$ et n vaut 1—5.

16. Procédé selon la revendication 15, caractérisée par le fait que le tensio-actif polyaromatique est choisi parmi au moins un sulfonate d'oxyde de diphényle alkylé ou un disulfonate de biphényle alkylé.

17. Procédé selon la revendication 15, caractérisé par le fait que le système tensio-actif anionique aqueux actif est la composition tensio-active aqueuse selon l'une des revendications 2 à 14.

**Patentansprüche**

1. Wäßrige Tensid-zusammensetzung bestehend aus (1) mindestens einem sulfonierten, alkylierten polyaromatischen Tensid; (2) mindestens einem Petroleumsulfonat und (3) mindestens einem Kondensationsprodukt von einem $C_8$—$C_{16}$-Alkanol und einem $C_2$—$C_3$-Alkylenoxid oder dem Sulfat dieses Produktes, dadurch gekennzeichnet, daß es in Kombination mit den obigen Komponenten (1), (2) und (3), (4) mindestens einen Glykoläther mit der Formel

$$R—(OR'—)_nOH \qquad (I)$$

enthält, worin R ein $C_1$—$C_6$-Alkylrest oder ein Phenylrest ist, R' ein $C_2$—$C_4$-Alkylenrest ist und n 1 bis 5 ist.

2. Zusammensetzung nach Anspruch 1, dadurch gekennzeichnet, daß bei dem Glykoläther nach Formel (I) R ein $C_1$—$C_4$-Alkylrest ist, R' Äthylen oder 1,2-Propylen ist und n 1 oder 2 ist.

3. Zusammensetzung nach einem der Ansprüche 1 oder 2, dadurch gekennzeichnet, daß das Tensid ein alkyliertes Diphenyloxysulfonat mit der Formel

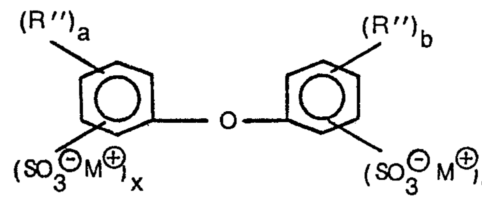

(II)

ist, wobei jedes R'' ein Alkylrest ist mit zwischen 10 und 18 Kohlenstoffatomen, jedes $M^+$ eine Hydrogen, Alkalimetallion, Erdalkalimetallion oder Ammoniumion ist; a oder b jeweils 0 oder 1 ist mit der Einschränkung, daß die Summe (a + b) mindestens 1 ist und x und y jeweils 0 oder 1 ist mit der Einschränkung, daß der durchschnittliche Wert von der Summe (x + y) für alle (II) mindestens 1,7 ist.

4. Zusammensetzung nach Anspruch 3, dadurch gekennzeichnet, daß $M^+$ Hydrogen oder ein Alkalimetallion ist.

5. Zusammensetzung nach Anspruch 4, dadurch gekennzeichnet, daß das alkylierte Diphenyloxidsulfonat eine Mischung im Gewichtsverhältnis 80:20 von Dinatrium-mono- und dialkyliertem -diphenylätherdisulfonat ist, wobei R'' ein verzweigter $C_{12}$-Alkylrest ist.

6. Zusammensetzung nach Anspruch 1, dadurch gekennzeichnet, daß das Tensid ein alkyliertes Biphenyldisulfonat mit der Formel

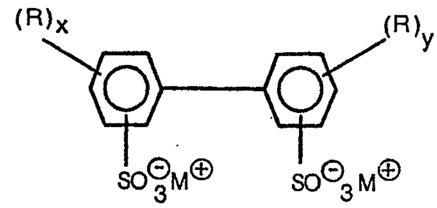

ist, worin R ein Alkylrest mit mindestens 6 Kohlenstoffatomen und wobei jedes R dasselbe oder etewas Verschiedenes sein kann; $M^+$ Hydrogen, ein Alkalimetallion, ein Erdalkalimetallion oder ein Ammoniumionrest ist und jedes $M^+$ dasselbe oder etwas Verschiedenes sein kann; und x und y jeweils ganze Zahlen von 0 bis 1 sind, mit der Einschränkung, daß die Summe von $(x + y) \geq 1$ ist.

7. Zusammensetzung nach Anspruch 6, dadurch gekennzeichnet, daß R ein geradkettiger oder verzweigter Alkylrest mit zwischen 8 und 18 Kohlenstoffatomen ist.

8. Zusammensetzung nach Anspruch 7, dadurch gekennzeichnet, daß $M^+$ ein Alkalimetallion ist.

9. Zusammensetzung nach Anspruch 8, dadurch gekennzeichnet, daß die Summe (x + y) 1 oder 2 ist.

10. Zusammensetzung nach Anspruch 6, dadurch gekennzeichnet, daß R ein geradkettiger oder verzweigter Alkylrest ist mit zwichen 10 und 18 Kohlenstoffatomen, daß $M^+$ ein Natrium- oder Kaliumion ist, und daß die Summe von (x + y) 1 oder 2 ist.

11. Zusammensetzung nach einem der vorhergehenden Ansprüche, dadurch gekennzeichnet, daß das Petroleumsulfonat ein durchschnittliches Molekulargewicht von mindestens 400 hat.

12. Zusammensetzung nach einem der vorhergehenden Ansprüche, dadurch gekennzeichnet, daß das Kondensationsprodukt das Produkt eines primären $C_{10}$—$C_{12}$-geradkettigen Akanols und eines Äthylenoxids ist, wobei das Produkt ein Verhältnis von Alkanol zu Oxid zwischen 1:1 und 1:10 hat.

13. Zusammensetzung nach einem der vorhergehenden Ansprüche, dadurch gekennzeichnet, daß es aus 100 Gew.-Teilen einer wäßrigen Mischung von: (1) 0,005 bis 3,0 Teilen des polyaromatischen Tensid, (2) 0,1 bis 12 Teilen des Petroleumsulfonats, (3) 0,01 bis 5 Teilen des Kondensationsprodukts,

(4) 4,5 bis 13,5 Teilen des Glykoläthers und (5) den restlichen Teilen Wasser besteht.

14. Zusammensetzung nach Anspruch 13, dadurch gekennzeichnet, daß es 100 Gew.-Teile einer wäßrigen Mischung umfaßt aus: (1) 0,30 bis 1,50 Teilen des polyaromatischen Tensid (2) 0,30 bis 3,0 Teilen des Petroleumsulfonats, (3) 0,25 bis 2,5 Teilen des Kondensationsproduktes, (4) 6,5 bis 9 Teilen des Glykoläthers und (5) den restlichen Teilen Wasser.

15. Verfahren zum Entfernen von Öl von einem porösen, unterirdischen Felsbecken (rock reservoir), das die folgenden Schritte umfaßt: Injizieren in das Becken eines aktiven, wäßrigen anionischen Tensid system, das aus (1) einem sulfonierten, alkylierten, polyaromatischen Tensid (2) einem Petroleumsulfonat, und (3) einem Kondensationsprodukt eines $C_8$—$C_{16}$-Alkanols und eines $C_2$—$C_3$-Alkylenoxids oder Sulfats dieses Produkts besteht, dadurch gekennzeichnet, daß das Tensid system in Kombination mit den obigen Komponenten (1), (2) und (3) mit (4) einem Glykoläther mit der Formel

$$R\text{—}(OR'\text{—})_nOH \qquad (I)$$

besteht, worin R ein $C_1$—$C_6$-Alkylrest oder ein Phenylrest ist, R' ein $C_2$—$C_4$-Alkylenrest ist und n 1 bis 5 ist.

16. Verfahren nach Anspruch 15, dadurch gekennzeichnet, daß das polyaromatische Tensid ausgewählt ist aus mindestens einem alkylierten Diphenyloxidsulfonat oder einem alkylierten Biphenyldisulfonat.

17. Verfahren, nach Anspruch 15, dadurch gekennzeichnet, daß das aktive, wäßrige anionische Tensidsystem die wäßrige Tensid-zusammensetzung nach einem der Ansprüche 2 bis 14 ist.